# EUROPEAN PATENT SPECIFICATION

(11) **EP 1 619 862 B1**
(45) Date of publication and mention of the grant of the patent: **04.04.2007**
(21) Application number: 04254336.3
(22) Date of filing: 20.07.2004
(51) Int. Cl.: H04M 1/247

(54) **Handheld electronic device having facilitated telephone dialing with audible sound tags, and associated method**
Tragbares elektronisches Gerät mit unterstützter Telefonwahl mit hörbaren Klangeinheiten, und zugehöriges Verfahren
Dispositif électronique portatif avec numérotation téléphonique facilitée utilisant des tags audibles, et procédé correspondant

(43) Date of publication of application: 25.01.2006
(73) Proprietor: Research In Motion Limited, Waterloo, Ontario N2L 3W8 (CA)
(72) Inventor: Griffin, Jason T., Waterloo, Ontario N2T 2J5 (CA); Lazaridis, Mihal, Waterloo, Ontario N2T 2K1 (CA); Paas, Julian, Mississauga, Ontario L2H 3L2 (CA); Steele, Jay D., Fall River, Nova Scotia B2T 1S9 (CA); Ranta, Craig E., Waterloo, Ontario N2K 4C2 (CA)
(74) Representative: Hibbert, Juliet Jane Grace

(56) References cited:
- WO-A-95/23476
- GB-A- 2 292 499
- GB-A- 2 332 172
- GB-A- 2 357 402
- US-A- 5 950 123
- US-B1- 6 477 390
- US-B1- 6 489 950

## Description

### BACKGROUND OF THE lNVENTION

### Field of the Invention

The invention relates generally to handheld electronic devices and, more particularly, to a handheld electronic device having facilitated telephone dialing. The invention also relates to a method of facilitating telephone dialing on a handheld electronic device.

### Description of the Related Art

Numerous types of handheld electronic devices are known. Examples of such handheld electronic devices include, for instance, personal data assistants (PDAs), handheld computers, two-way pagers, cellular telephones, and the like. Such handheld electronic devices are generally intended to be portable and thus are relatively small. Many handheld electronic devices also feature wireless communication capability although many such handheld electronic devices are stand-alone devices that are functional without communication with other devices.

Cellular telephones and other devices that provide cellular telephone capabilities often are used in automobiles, frequently while the telephone user is driving the automobile. A user typically must take his eyes from the road to perform a telephone dialing operation, which is undesirable, even if it happens only momentarily. Cellular telephones are also used when walking and doing other activities, and a user typically must look at the telephone to perform a telephone dialing operation, which is likewise undesirable. While cellular telephones oftentimes can store telephone numbers for later recall, such recalling of stored telephone numbers still requires the visual attention of a user. Even if a user can dial a conventional telephone keyboard without looking, certain telephone devices can include an unconventional keyboard that might require the visual attention of a user, which can likewise be undesirable.

US 6,489,950 B 1 describes a handheld device with a keyboard, thumbwheel, display and associated software. The associated software has a plurality of features to optimise efficient use of the limited keyboard space and encourage the use of the device by thumb-based data entry through the thumbwheel and/or through a combination of a minimum number of keystrokes.

### SUMMARY OF THE INVENTION

An improved handheld electronic device and an associated method provide facilitated telephone dialing by providing audible sound tags in the form of spoken words representative of numbers that can be selected by a user for dialing. The handheld electronic device includes an input apparatus that can generate a plurality of navigational inputs and at least a first selecting input. The input apparatus may include a rotatable dial, the rotation of which provides navigational inputs, and the dial may be translatable, with said translation generating a selecting input. When a processor of the handheld electronic device detects a navigational input, the handheld electronic device outputs an audible sound in the form of a spoken word of the digit that corresponds with the navigational input.

Accordingly, an aspect of the invention is to provide an improved handheld electronic device and a method that facilitate telephone dialing.

Another aspect of the invention is to provide an improved handheld electronic device and method in which audible sound tags representative of spoken digits are provided to a user to indicate digits that can be selected for dialing as part of a telephone number.

Another aspect of the invention is to provide an improved handheld electronic device and method in which a user can operate a telephone dialing function by rotating a rotatable dial, hearing audible sound tags representative of spoken words corresponding with digits, and selecting digits based upon the sound tags to assemble a telephone number which can then be dialed.

These and other aspects of the invention are provided by an improved method of enabling input into a handheld electronic device, the handheld electronic device including an input apparatus having at least one input member that is movable in a first direction and in a second direction to generate a plurality of navigational inputs, the input apparatus being adapted to generate at least one selecting input to said handheld electronic device, in which the general nature of the method can be stated as including outputting an initial audible sound tag representing an initial spoken word that corresponds with an initial navigational position, detecting a first of said navigational inputs from said at least one input member, detecting which of movement of said at least one, input member in said first direction and movement of said at least one input member in said second direction generated said first of said navigational inputs, and outputting a first audible sound tag representing a first spoken word that corresponds with said first of said navigational inputs.

The method may include detecting a first of the selecting inputs and processing a function that corresponds with the first of the navigational inputs. The improved method may include detecting a second of the navigational inputs, detecting a third of the navigational inputs within a predetermined period of time after detection of the second of the navigational inputs, and outputting a third audible sound tag representing a third spoken word that corresponds with the third of the navigational inputs without outputting an audible sound tag that corresponds with the second of said navigational inputs. The method may include again outputting the first audible sound tag after the expiration of a predetermined period of time during which neither a second of the navigational inputs nor a selecting input is detected. The method may include incrementing a counter when the first of the navigational inputs results from movement of the at least one input member in the first direction, and decrementing the counter when the first of the navigational inputs results from movement of the at least one input member in the second direction.

Other aspects of the invention are provided by an improved handheld electronic device, the general nature of which can be stated as including a processor apparatus, an input apparatus, a memory, and an audible output transducer. The input apparatus cooperates with the processor apparatus and includes at least one input member that is movable in a first direction and in a second direction to generate a plurality of navigational inputs. Also, the input apparatus is adapted to generate at least one selecting input to the processor apparatus. The memory and the audible output transducer cooperate with the processor apparatus. The processor apparatus outputs an initial audible sound tag representing an initial spoken word that corresponds with an initial navigational position, detects one of the navigational inputs from the at least one input member, detects which of movement of the at least one input member in the first direction and movement of the at least one input member in the second direction generated the one of the navigational inputs, and obtains from the memory a corresponding first signal. Responsive to the first signal, the audible output transducer outputs a sound corresponding with a spoken word.

The improved handheld electronic device may be configured such that the processor apparatus includes a processor and a digital-to-analog converter. In such a configuration, the digital-to-analog converter would cooperate with the processor, and the audible output transducer would cooperate with the digital-to-analog converter. In such a configuration, the first signal would be a first digital signal and, responsive to the first digital signal, the digital-to-analog converter would output to the audible output transducer a first analog signal representing the spoken work. The improved handheld electronic device may be configured such that the processor apparatus includes a counter, wherein the processor apparatus increments the counter when the first of the navigational inputs results from movement of the at least one input member in the first direction, and wherein the processor apparatus decrements the counter when the first of the navigational inputs results from movement of the at least one input member in the second direction.

### BRIEF DESCRIPTION OF THE DRAWINGS

A full understanding of the invention can be gained from the following Description of the Preferred Embodiment when read in conjunction with the accompanying drawings in which:
Fig. 1 is a top plan view of an improved handheld electronic device in accordance with the invention;
Fig. 2 is a side view of the handheld electronic device of Fig. 1;
Fig. 3 is a block diagram of the handheld electronic device of Fig. 1;
Fig. 4 is a flowchart depicting a portion of a routine executed by a processor of the handheld electronic device of Fig. 1; and
Fig. 5 is another flowchart depicting another portion of the routine executed by the processor of the handheld electronic device of Fig. 1.

Similar numerals refer to similar parts throughout the specification.

### DESCRIPTION OF THE PREFERRED EMBODIMENT

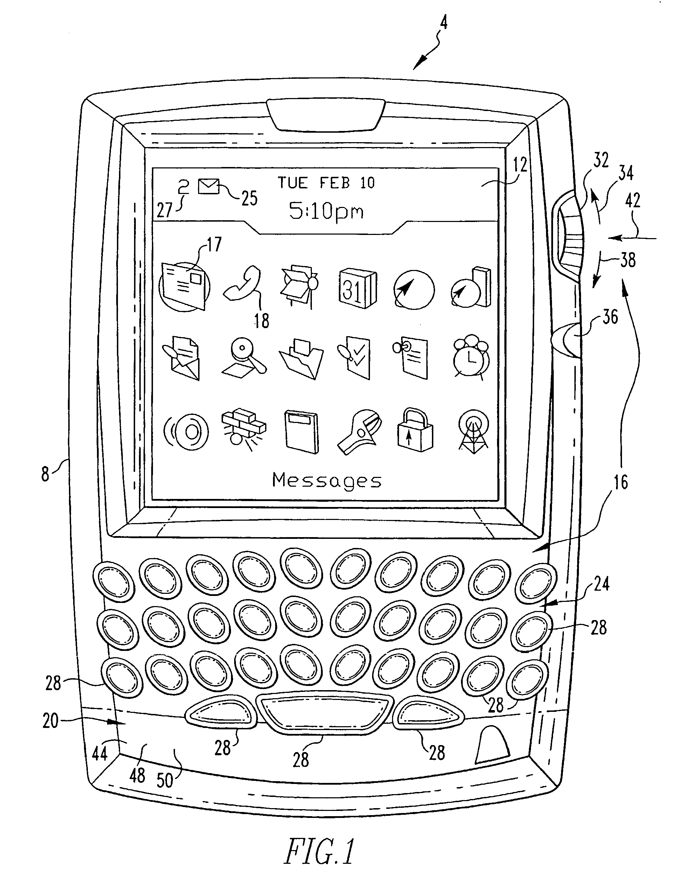

An improved handheld electronic device 4 in accordance with the invention is indicated generally in Figs. 1-3. Examples of handheld electronic devices are included in U.S. Patent Nos. 6,452,588 and 6,489,950 which are incorporated by reference herein. The handheld electronic device 4 includes a housing 8, a display 12, an input apparatus 16, and a processor apparatus 20. The handheld electronic device 4 is of a type that includes a cellular telephone capability 18 which, as will be described in greater detail below, provides facilitated dialing in accordance with an improved method of the invention.

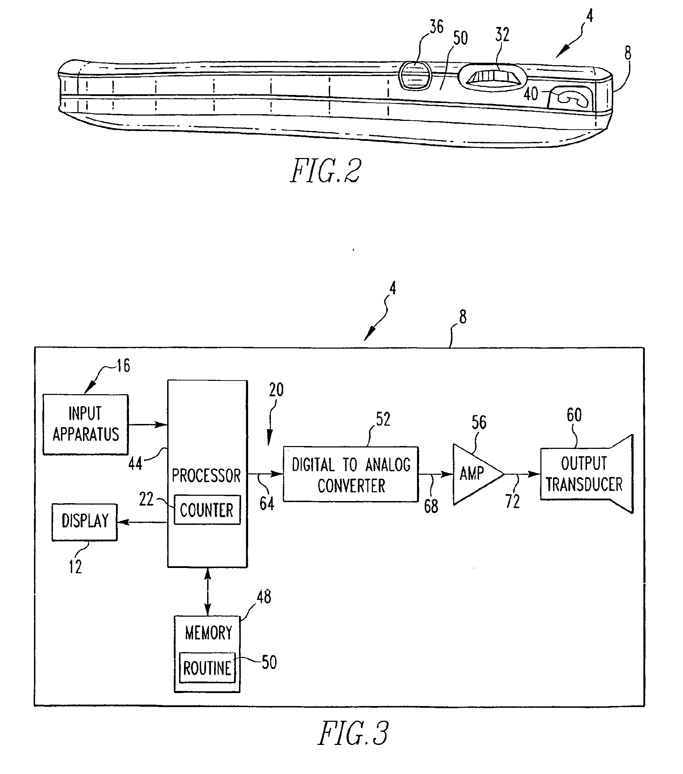

The exemplary input apparatus 16 includes a keyboard 24 having a plurality of keys 28, an input dial 32, an <ESCAPE> key 36, and a telephone key 40 (Fig. 2). The input dial 32 is rotatable to provide a plurality of navigational inputs to the processor apparatus 20. The input dial 32 also is translatable in the direction of the arrow 42 of Fig. 1 to provide a selecting input to the processor apparatus 20.

As can be seen in Fig. 3, the processor apparatus 20 includes a processor 44, a counter 22 (e.g., hardware, software, firmware, and the like), a memory 48, a digital-to-analog converter 52, an amplifier 56, and an audible output transducer 60. The processor 44 may be, for example and without limitation, a microprocessor (µP) or other type of processor. The memory 48 is cooperable with the processor 44 and may be any of a variety of internal an/or external storage media including RAM, ROM, EPROM, EEPROM, and/or the like. The processor apparatus 20 also includes a plurality of sound tags 50 and at least a first routine 54. The sound tags 50 are representative of spoken words of digits, symbols, and/or functions that can be provided in the context of a telephone dialing operation. The sound tags 50 may be stored in the memory 48 as .wav files or in other formats, and may be representative of spoken words in the English language or other languages. The routine 54 is executed by the processor 44 and may be in the form of software, firmware, and the like.

Responsive to a navigational input from the input apparatus 16, i.e., a rotation of the input dial 32, the processor 44 can access the memory 48 and retrieve one of the sound tags 50 that corresponds with the navigational input. More specifically, the input dial 32 is an input member that is rotatable in a first direction, as is indicated by the arrow 34 of Fig. 1, and is rotatable in a second direction, as is indicated by the arrow 38. The processor 44 detects whether the navigational input was generated by a rotation of the input dial 32 in the first direction 34 or in the second direction 38. If the rotation of the input dial 32 was in the first direction 34, then the processor 44 increments the counter 22. If the rotation of the input dial 32 was in the second direction 38, then the processor 44 decrements the counter 22. Responsive to the contents of the counter 22, the processor 44 accesses the memory 48 and retrieves the sound tags 50 that corresponds with the navigational input.

The processor 44 can then provide this retrieved sound tag 50 in the form of a sequence of digital values 64 (Fig. 3) to the digital-to-analog converter 52 which converts this sequence into a time-varying analog signal 68. The digital-to-analog converter 52 then provides the analog signal, which corresponds with a spoken word, to the amplifier 56. The amplifier 56 then provides an amplified analog signal 72 to the audible output transducer 60 which outputs an audible sound representative of the spoken word.

The amplifier 56 may have an adjustable gain (not expressly depicted) that is set by the processor 44. The audible output transducer 60 can be any of an internal speaker, a separate loudspeaker, a headset speaker, or any other such device. Depending upon the nature of the audio output transducer 60, the gain of the amplifier 56 preferably is accordingly adjusted by the processor 44.

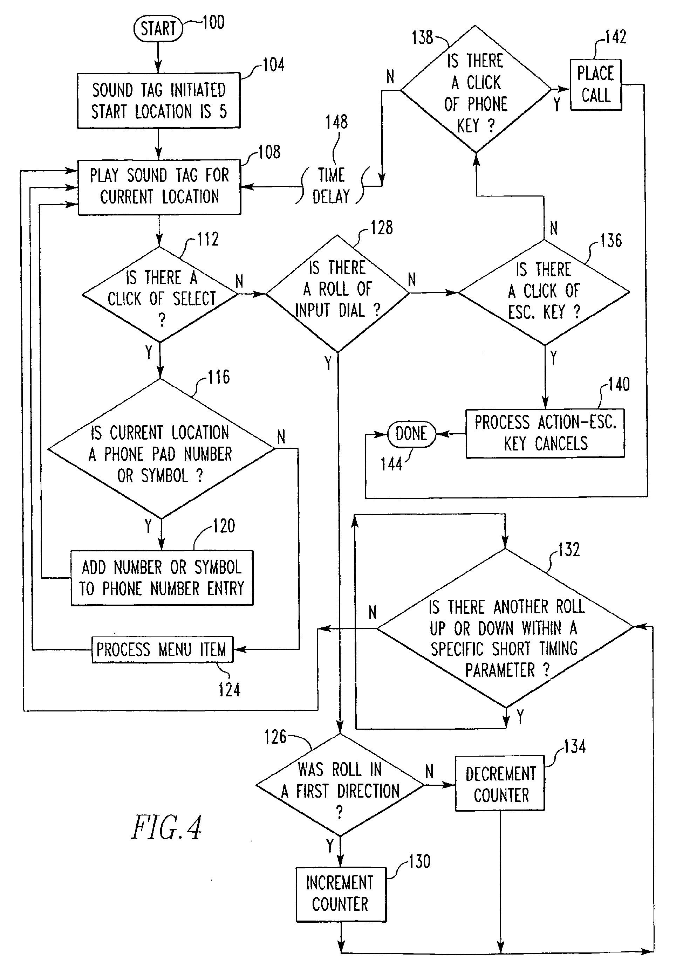

An exemplary flow chart is depicted in Fig. 4 as representative of a portion of the routine 54 that is executed by the processor 44. The user initiates, at 100, a telephone function of the handheld electronic device 4, such as by switching on the handheld electronic device 4 or by pressing a given button or selecting an option from a menu, or the like.

The exemplary input apparatus 16 of Fig. 1 includes an exemplary input member in the form of an input dial 32 which, when rotated, provides the navigational inputs to the processor 44. More specifically, the exemplary input dial 32 includes a plurality of detents (not specifically depicted) that are circumferentially distributed such that the user receives a desirable tactile feedback in the form of a click as the input dial 32 is rotated through a certain angle. When the input dial 32 is rotated in a first direction, the input dial 32 provides with each click a navigational input to the processor 44, with sequential navigational inputs of this type being representative of progressively increasing digits. When the input dial 32 is rotated in a second, opposite direction, the input dial 32 provides with each click a navigational input to the processor 44, with sequential navigational inputs of this type being representative of progressively decreasing digits. It is understood that the input apparatus 16 could have input members other than the input dial 32, such as, without limitation, joysticks and the like.

In the exemplary embodiment, the initial contents of the counter 22 correspond with a quantity of five. The contents of the counter 22 correspond with the rotational position of the input wheel 32. As such, the initial position of the input dial 32, that is, the rotational position of the input dial 32 at initiation of the telephone function, is considered by the processor apparatus 20 to correspond with the digit 5. The processor apparatus 20 thus initiates at 104 the sound tag "five" upon initiation of the telephone function. The sound tag of the spoken word "five" is then played, as at 108.

If, after playing a sound tag 50, the next input detected by the processor 44 is a selecting entry, such as at 112, then the processor 44 then determines as at 116 whether the current location of the input dial 32 corresponds with a predefined function or if it corresponds with one of a digit and a symbol. A digit would be, for instance, one of the digits 0-9, and a symbol would be, for instance, one of # and *. One of the predefined functions might be, for instance, a function that replays the telephone number as it is stored in the memory 48. Other functions can be envisioned. If the current location of the input dial 32 corresponds with one of a digit and a symbol, then the digit or symbol is added as at 120 to a telephone number entry within the memory 48. With the aforementioned storage of the digit or symbol in the memory 48, processing continues at 108 to play additional sound tags 50 to enable completion of a telephone number for dialing.

An exemplary chart of the counter 22 and the character or function with which it corresponds is presented in Table 1. The exemplary Table 1 includes the digits 0-9, the # and * symbols, and two predefined functions. The counter 22 could be configured such that, for instance, a decrement from a value of zero would result in a value of thirteen, and an increment to a value of thirteen would result in a value of zero.

**Table 1**

| Counter | Corresponds with |
|---|---|
| 0 | 0 |
| 1 | 1 |
| 2 | 2 |
| 3 | 3 |
| 4 | 4 |
| 5 | 5 |
| 6 | 6 |
| 7 | 7 |
| 8 | 8 |
| 9 | 9 |
| 10 | # |
| 11 | * |
| 12 | Function 1 |
| 13 | Function 2 |

If, as at 116, the current location of the input dial 32 refers neither to a digit nor to a symbol, meaning that the current location would correspond with a predefined function of the telephone dialing system, then the processor 44 would process as at 124 the menu item and processing would return to 108 or, depending upon the nature of the menu item, processing may continue elsewhere. The menu items represented at various locations of the input dial 32 could be pre-programmed or user-defined.

If, as at 112, the next input detected after the playing of a sound tag 50 is not a selecting input, then the processor 44 would then determine at 128 whether the input dial 32 had been rotated to provide a navigational input. If a navigational input is detected at 128, such as from a rotation of the input dial 32, then the processor 44 detects at 126 whether the rotation of the input dial 32 was in the first direction 34. If rotation of the input dial 32 was in the first direction 34, then the processor 44 increments at 130 the counter 22. If rotation of the input dial 32 was not in the first direction 34, meaning that rotation of the input dial 32 was in the second direction 38, then the processor 44 decrements at 134 the counter 22.

The processor 44 then detects at 132 whether another navigational input is detected within a specific short timing parameter such as, for example, 100 milliseconds. If no additional navigational input is detected during the timing parameter, then processing continues at 108 where the processor 44 initiates playing of the sound tag 50 that corresponds with the then current location of the input dial 32 (i.e., the value of the counter 22). On the other hand, if the processor detects at 132 an additional navigational input during the timing parameter, such as would occur if a user, for example, quickly rotated the input dial 32 three clicks in a certain direction, then the processor 44 would detect such additional navigational inputs and would not play a sound tags 50 until the input dial 32 had been stationary for the predetermined timing parameter. As a result, if the user rotates the input dial 32 several rotational clicks in a short period of time, the processor 44 advantageously does not play sound tags 50 for the intermediate clicks, only for the final location of the input dial 32. The timing parameter could be any suitable value and/or may be adjustable by the user.

If, instead of detecting at 128 an additional navigational input, the processor 44 detects at 136 an input of the <ESCAPE> key 36, then the processor 44 would process at 140 the <ESCAPE> function. Alternatively if, instead of detecting at 136 an input of the <ESCAPE> key 36, the processor 44 detects at 138 an input of the telephone key 40, the processor would execute at 142 the telephone function. The <ESCAPE> function, which is initiated by the <ESCAPE> key 36, provides a cancellation operation at 140, such as an operation that cancels or deletes the last selected digit or symbol, that cancels the entire entered telephone number, or that terminates the telephone operation. The telephone function provided by the telephone key 40 is an <ENTER> operation that places at 142 a telephone call by dialing the telephone number stored in the memory 48. Upon placement of the telephone call, the telephone dialing process is terminated as at 144.

If no additional input is detected at 136 by the processor 44, then after a predetermined time delay 148 the processor 44 again plays at 108 the same sound tag 50. For instance, if after playing the sound tag "five" a time delay of, for example, four seconds elapses without detection of any of a selecting input, a navigational input, an input by the <ESCAPE> key 36, and an input by the telephone key 40, then after four seconds the processor 44 would again play the sound tag 50 "five".

As an example, if the user desired to dial the telephone number 555-6844, the user would initiate the telephone dialing operation at 100, and the audible output transducer 60 would play the sound tag 50 "five". The user would translate the input dial 32 in the direction of the arrow 42 (Fig. 1) to provide a selecting input to select a first digit for the telephone number. Upon selecting of the first digit, processing would return to 108, and the audible output transducer 60 would again play the sound tag 50 of "five" because the input dial 32 would still be at the same location. The user would then again translate the input dial 32, would again hear the sound tag 50 "five", and would translate the input dial 32 a third time. Thus far, the prefix "555" would be stored in the memory 48.

The user would then rotate the input dial 32 a single click in the first direction 34, e.g. counter-clockwise. The processor 44 having detected at 128 another navigational input, and having detected at 132 an absence of a further navigational input within the timing parameter, would play the sound tag 50 "six". The user then would translate the input dial 32 to provide at 112 a selecting input, and the digit "6" would be added to the incomplete telephone number stored in the memory 48. The user would then rotate the input dial 32 two clicks in the first direction 34 so that the input dial 32 would correspond with the digit "8". If the user had rotated the input dial 32 quickly, i.e., so that the navigational input for "8" is detected at 132 within the short timing parameter after detection of the navigational input for "7", then the processor 44 would play the sound tag 50 "eight" without having played the intermediate sound tag 50 "seven". The user would then provide a selecting input by translating the input dial 32, and the digit "8" would be added to the incomplete telephone number stored in the memory 48.

The user would then rotate the input dial 32 four clicks in the second direction 38, e.g., clockwise, to arrive at a rotational position corresponding with the digit "4". The processor 44 would play the sound tag 50 corresponding with the spoken word "four", and the user would provide a selecting input by translating the input dial 32, and the digit "4" would be added to the incomplete telephone number stored in the memory 48. Without moving the input dial 32, the processor 44 would again play the sound tag 50 corresponding with the spoken word "four", and the user would provide the selecting input of translating the input dial 32 to add the digit "4" to the telephone number stored in the memory 48. The user would then press the telephone key 40 to process, i.e., dial, the telephone number "555-6844" that is stored in the memory 48. The telephone dialing operation would then cease at 144 and the telephone call itself would proceed.

It is understood that the telephone call could be initiated in ways other than or in addition to pressing the telephone key 40. For instance, a user could quickly translate the thumbwheel 32 twice in the direction of the arrow 42 (Fig. 1), such as with a "double click". Similarly, the handheld electronic device 4 might be configured, if desired, to automatically dial the telephone number if it recognizes that a complete telephone number has been entered by a user. Other ways of initiating the dialing operation are possible.

It is understood that any type of telephone number could be dialed with the aforementioned improved routine 54 and method. For instance, the user could additionally provide area codes, country codes, and any other numbers and/or symbols that might be needed in dialing a desired telephone number. Also, if any time during the dialing process the user rotates the input dial 32 to correspond with a predefined function and provides a selecting input for the predefined function , the predefined function will be selected and executed.

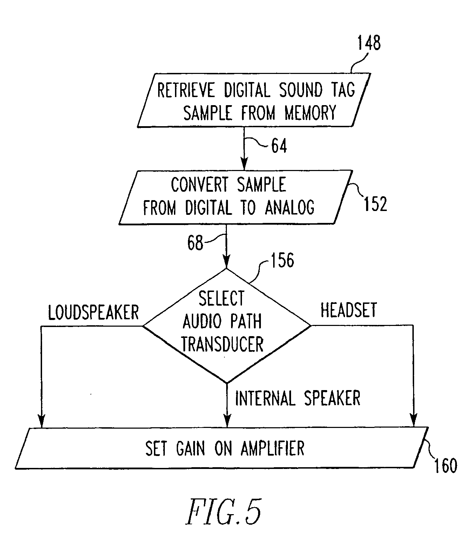

An exemplary flowchart of the portion of the routine 54 that corresponds with the playing of the sound tags 50 is provided in Fig. 5. For instance, upon detecting the present location of the input dial 32, the processor 44 might initiate retrieval at 148 from the memory 48 a digital sound tag 50 representative of the current location of the input dial 32. The digital sound tag 50 would then be transferred at 152 in the form of a sequence of digital values 64 to the digital-to-analog converter 52. The digital-to-analog converter 52 would then convert the received sequence into a time-varying analog output 68. The processor 44 would determine at 156 the particular audio path to provide the time-varying analog output 68 to the output transducer, and this will determine, at least in part, the gain setting for the amplifier 56. The processor 44 then sets at 160 the gain on the amplifier 56, and the time-varying analog output 68 is delivered from the digital-to-analog converter 52 to the amplifier 56. It is understood that the amplified analog signal representative of a sound would then be transmitted to the audible output transducer 60, and the audible output transducer 60 would then produce an audible sound corresponding with a spoken word representative of the current rotational position of the input dial 32.

As indicated above, if the input apparatus 16 includes a different input member, such as a joystick, the telephone dialing method would function much the same as is depicted by the flow chart of Figs. 4 and 5, except that instead of rolling, the joystick might pivot to provide navigational and/or selecting inputs. Such a joystick configuration may operate in a nonlinear mode, such as by allowing a user to move from the digit "5" to the digit "2" with a single upward motion. Such a joystick might comply with the mapping described in the standard ITU E.161, or may be of another configuration. It is also understood that the method herein could be applied to other applications, such as different telephone applications and non-telephone applications.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the claims appended.

## Claims

1. A method of enabling input into a handheld electronic device (4), the handheld electronic device including an input apparatus (16) having at least one input member (32) that is movable in a first direction (34) and in a second direction (38) to generate a plurality of navigational inputs, the input apparatus being adapted to generate at least one selecting input to said handheld electronic device, said method comprising:
outputting an initial audible sound tag representing an initial spoken word that corresponds with an initial navigational position;
detecting a first of said navigational inputs from said at least one input member;
detecting which of movement of said at least one input member in said first direction and movement of said at least one input member in said second direction generated said first of said navigational inputs; and
outputting a first audible sound tag representing a first spoken word that corresponds with said first of said navigational inputs.

2. The method of Claim 1, further comprising detecting a second of said navigational inputs and outputting a second audible sound tag representing a second spoken word that corresponds with said second of said navigational inputs.

3. The method of Claim 1, further comprising detecting a second of said navigational inputs, detecting a third of said navigational inputs within a predetermined period of time after detection of the second of said navigational inputs, and outputting another audible sound tag representing another spoken word that corresponds with said third of said navigational inputs without outputting an audible sound tag that corresponds with the second of said navigational inputs.

4. The method of Claim 1, further comprising detecting a first of said at least one selecting input and processing a function that corresponds with said first of said navigational inputs.

5. The method of Claim 4 further comprising storing in said handheld electronic device a value that corresponds with said function that corresponds with said first of said navigational inputs.

6. The method of Claim 5, further comprising detecting a second of said at least one selecting input, said second of said at least one selecting input being an enter input, and processing a function that includes performing an enter operation.

7. The method of Claim 6 further comprising employing as said performing an enter operation dialing a telephone number that corresponds with said value.

8. The method of Claim 7 further comprising employing a dial (32) with said input apparatus and detecting a rotation of said dial.

9. The method of Claim 1, further comprising again outputting the first audible sound tag after expiration of a predetermined period of time during which neither a second of said navigational inputs nor a selecting input is detected.

10. The method of Claim 1 further comprising incrementing a counter (22) when said first of said navigational inputs results from movement of said at least one input member in said first direction, and decrementing said counter when said first of said navigational inputs results from movement of said at least one input member in said second direction.

11. A handheld electronic device (4) comprising:
a processor apparatus (20);
an input apparatus (16) cooperating with said processor apparatus, said input apparatus including at least one input member (32) that is movable in a first direction (34) and in a second direction (38) to generate a plurality of navigational inputs, the input apparatus being adapted to generate at least one selecting input to said processor apparatus;
a memory (48) cooperating with said processor apparatus; and
an audible output transducer (60) cooperating with said processor apparatus,
wherein said processor apparatus is adapted to output an initial audible sound tag representing an initial spoken word that corresponds with an initial navigational position, detect one of said navigational inputs from said at least one input member, detect which of movement of said at least one input member in said first direction and movement of said at least one input member in said second direction generated said one of said navigational inputs, and obtain from said memory a corresponding first signal, and
wherein said audible output transducer responsive to said first signal is adapted to output a sound corresponding with a spoken word.

12. The handheld electronic device of Claim 11 wherein said processor apparatus includes a processor (44) and a digital-to-analog converter (52) cooperating with said processor, said audible output transducer cooperating with said digital-to-analog converter, wherein said first signal is a first digital signal, and wherein said digital-to-analog converter responsive to said first digital signal is adapted to output to said audible output transducer a first analog signal representing said spoken work.

13. The handheld electronic device of Claim 11 wherein said processor apparatus includes a counter (22), wherein said processor apparatus is adapted to increment said counter when said first of said navigational inputs results from movement of said at least one input member in said first direction, and wherein said processor apparatus is adapted to decrement said counter when said first of said navigational inputs results from movement of said at least one input member in said second direction.

14. The handheld electronic device of Claim 11 wherein said input apparatus includes a rotatable dial (32).

15. The handheld electronic device of Claim 14 wherein rotation of said rotatable dial generates said navigational inputs to said processor apparatus.

16. The handheld electronic device of Claim 15 wherein said rotatable dial is translatable, translation of said rotatable dial generating said at least one selecting input.

17. The handheld electronic device of Claim 11 wherein, responsive to a first of said at least one selecting input, said processor apparatus is adapted to process a function that corresponds with said first of said navigational inputs and store in said memory a value that corresponds with said first of said navigational inputs.

18. The handheld electronic device of Claim 17 wherein, responsive to a second of said at least one selecting input, said processor apparatus is adapted to perform an enter operation.

19. The handheld electronic device of Claim 18 wherein said enter operation includes dialing a telephone number that corresponds with the value of said memory.

## Patentansprüche

1. Verfahren zum Ermöglichen einer Eingabe in eine tragbare elektronische Vorrichtung (4), wobei die tragbare elektronische Vorrichtung eine Eingabeeinrichtung (16) umfasst, die wenigstens ein Eingabeelement (32) aufweist, das in einer ersten Richtung (34) und in einer zweiten Richtung (38) bewegbar ist, um eine Vielzahl von Navigationseingaben zu erzeugen, wobei die Eingabeeinrichtung geeignet ist, wenigstens eine Auswahleingabe an die tragbare elektronische Vorrichtung zu erzeugen, wobei das Verfahren umfasst:
Ausgeben eines anfänglichen Hörtonzeichens, das ein anfänglich gesprochenes Wort, welches einer anfänglichen Navigationsposition entspricht, darstellt,
Erfassen einer ersten der Navigationseingaben von dem wenigstens einen Eingabeelement,
Erfassen, welche Bewegung des wenigstens einen Eingabeelementes in der ersten Richtung und Bewegung des wenigstens einen Eingabeelementes in der zweiten Richtung die erste der Navigationseingaben erzeugte, und
Ausgeben eines ersten Hörtonzeichens, das ein erstes gesprochenes Wort, welches der ersten der Navigationseingaben entspricht, darstellt.

2. Verfahren nach Anspruch 1, weiterhin umfassend ein Erfassen einer zweiten der Navigationseingaben und Ausgeben eines zweiten Hörtonzeichens, das ein zweites gesprochenes Wort, welches der zweiten der Navigationseingaben entspricht, darstellt.

3. Verfahren nach Anspruch 1, weiterhin umfassend ein Erfassen einer zweiten der Navigationseingaben, Erfassen einer dritten der Navigationseingaben innerhalb einer vorbestimmten Zeitdauer nach Erfassung der zweiten der Navigationseingaben und Ausgeben eines anderen Hörtonzeichens, das ein anderes gesprochenes Wort, welches der dritten der Navigationseingaben entspricht, darstellt, ohne Ausgeben eines Hörtonzeichens, das der zweiten der Navigationseingaben entspricht.

4. Verfahren nach Anspruch 1, weiterhin umfassend ein Erfassen einer ersten der wenigstens einen Auswahleingabe und Durchführen einer Funktion, welche der ersten der Navigationseingaben entspricht.

5. Verfahren nach Anspruch 4, weiterhin umfassend ein Speichern eines Wertes, welcher der Funktion, die mit der ersten der Navigationseingaben korrespondiert, entspricht, in der tragbaren elektronischen Vorrichtung.

6. Verfahren nach Anspruch 5, weiterhin umfassend ein Erfassen einer zweiten der wenigstens einen Auswahleingabe, wobei die zweite der wenigstens einen Auswahleingabe eine Eintragseingabe ist, und Durchführen einer Funktion, die ein Durchführen eines Eintragsvorganges umfasst.

7. Verfahren nach Anspruch 6, weiterhin umfassend ein Verwenden eines Wählens einer Telefonnummer, welche dem Wert entspricht, als ein Durchführen des Eintragsvorganges.

8. Verfahren nach Anspruch 7, weiterhin umfassend ein Verwenden einer Wählscheibe (32) mit der Eingabeeinrichtung und Erfassen einer Drehung der Wählscheibe.

9. Verfahren nach Anspruch 1, weiterhin umfassend wiederum ein Ausgeben des ersten Hörtonzeichens nach Ablauf einer vorbestimmten Zeitdauer, während welcher weder eine zweite der Navigationseingaben noch eine Auswahleingabe erfasst wird.

10. Verfahren nach Anspruch 1, weiterhin umfassend ein Aufwärtszählen eines Zählers (22), wenn die erste der Navigationseingaben aus einer Bewegung des wenigstens einen Eingabeelementes in der ersten Richtung resultiert, und Abwärtszählen des Zählers, wenn die erste der Navigationseingaben aus einer Bewegung des wenigstens einen Eingabeelementes in der zweiten Richtung resultiert.

11. Tragbare elektronische Vorrichtung (4), umfassend:
Eine Prozessoreinrichtung (20),
eine Eingabeeinrichtung (16), die mit der Prozessoreinrichtung zusammenwirkt, wobei die Eingabeeinrichtung wenigstens ein Eingabeelement (32) umfasst, das in einer ersten Richtung (34) und in einer zweiten Richtung (38) bewegbar ist, um eine Vielzahl von Navigationseingaben zu erzeugen, wobei die Eingabeeinrichtung geeignet ist, wenigstens eine Auswahleingabe an die Prozessoreinrichtung zu erzeugen,
einen Speicher (48), der mit der Prozessoreinrichtung zusammenwirkt, und
einen Tonausgabetransducer (60), der mit der Prozessoreinrichtung zusammenwirkt,
wobei die Prozessoreinrichtung geeignet ist, ein anfängliches Hörtonzeichen auszugeben, das ein anfängliches gesprochenes Wort, welches einer anfänglichen Navigationsposition entspricht, darstellt, eine der Navigationseingaben von dem wenigstens einen Eingabeelement zu erfassen, zu erfassen, welche Bewegung des wenigstens einen Eingabeelementes in der ersten Richtung und Bewegung des wenigstens einen Eingabeelementes in der zweiten Richtung die eine der Navigationseingaben erzeugt, und ein korrespondierendes erstes Signal von dem Speicher zu erhalten, und
wobei der Tonausgabetransducer in Antwort auf das erste Signal geeignet ist, einen Ton, welcher dem gesprochenen Wort entspricht, auszugeben.

12. Tragbare elektronische Vorrichtung nach Anspruch 11, wobei die Prozessoreinrichtung einen Prozessor (44) und einen Digital/Analog-Wandler (52), der mit dem Prozessor zusammenwirkt, umfasst, wobei der Tonausgabetransducer mit dem Digital/Analog-Wandler zusammenwirkt, wobei das erste Signal ein erstes digitales Signal ist und wobei der Digital/Analog-Wandler in Antwort auf das erste digitale Signal geeignet ist, an den Tonausgabetransducer ein erstes analoges Signal, welches das gesprochene Wort darstellt, auszugeben.

13. Tragbare elektronische Vorrichtung nach Anspruch 11, wobei die Prozessoreinrichtung einen Zähler (22) umfasst, wobei die Prozessoreinrichtung geeignet ist, den Zähler aufwärtszuzählen, wenn die erste der Navigationseingaben aus der Bewegung des wenigstens einen Eingabeelementes in der ersten Richtung resultiert, und wobei die Prozessoreinrichtung geeignet ist, den Zähler abwärtszuzählen, wenn die erste der Navigationseingaben aus der Bewegung des wenigstens einen Eingabeelementes in der zweiten Richtung resultiert.

14. Tragbare elektronische Vorrichtung nach Anspruch 11, wobei die Eingabeeinrichtung eine drehbare Wählscheibe (32) umfasst.

15. Tragbare elektronische Vorrichtung nach Anspruch 14, wobei die Drehung der drehbaren Wählscheibe die Navigationseingaben an die Prozessoreinrichtung erzeugt.

16. Tragbare elektronische Vorrichtung nach Anspruch 15, wobei die drehbare Wählscheibe übersetzbar ist, wobei die Übersetzung der drehbaren Wählscheibe die wenigstens eine Auswahleingabe erzeugt.

17. Tragbare elektronische Vorrichtung nach Anspruch 11, wobei die Prozessoreinrichtung in Antwort auf eine erste der wenigstens einen Auswahleingabe geeignet ist, eine Funktion, welche der ersten der Navigationseingaben entspricht, durchzuführen und einen Wert, welcher der ersten der Navigationseingaben entspricht, in dem Speicher zu speichern.

18. Tragbare elektronische Vorrichtung nach Anspruch 17, wobei die Prozessoreinrichtung in Antwort auf eine zweite der wenigstens einen Auswahleingabe geeignet ist, einen Eintragsvorgang durchzuführen.

19. Tragbare elektronische Vorrichtung nach Anspruch 18, wobei der Eintragsvorgang ein Wählen einer Telefonnummer, welche dem Wert des Speichers entspricht, umfasst.

## Revendications

1. Procédé permettant la saisie sur un dispositif électronique portatif (4), le dispositif électronique portatif comprenant un appareil de saisie (16) possédant au moins un élément de saisie (32) qui peut se déplacer dans une première direction (34) et dans une seconde direction (38), afin de produire une pluralité de saisies de navigation, l'appareil de saisie étant conçu pour produire au moins une saisie de sélection pour ledit dispositif électronique portatif, ledit procédé comprenant les étapes consistant à :
produire un marqueur sonore audible initial représentant un mot prononcé initial qui correspond à une position initiale de navigation ;
détecter une première desdites saisies de navigation en provenance dudit au moins un élément de saisie ;
détecter quel est, entre le mouvement dudit au moins un élément de saisie dans ladite première direction et le mouvement dudit au moins un élément de saisie dans ladite seconde direction, celui qui a produit ladite première desdites saisies de navigation ; et
produire un premier marqueur sonore audible représentant un premier mot prononcé qui correspond à ladite première desdites saisies de navigation.

2. Procédé selon la revendication 1, comprenant en outre les étapes consistant à détecter une deuxième desdites saisies de navigation et à produire un deuxième marqueur sonore audible représentant un deuxième mot prononcé qui correspond à ladite deuxième desdites saisies de navigation.

3. Procédé selon la revendication 1, comprenant en outre les étapes consistant à détecter une deuxième desdites saisies de navigation, détecter une troisième desdites saisies de navigation dans une période de temps prédéterminée après la détection de la deuxième desdites saisies de navigation et produire un autre marqueur sonore audible représentant un autre mot prononcé qui correspond à ladite troisième desdites saisies de navigation, sans produire un marqueur sonore audible qui correspond à la deuxième desdites saisies de navigation.

4. Procédé selon la revendication 1, comprenant en outre les étapes consistant à détecter une première de ladite au moins une saisie de sélection et à traiter une fonction qui correspond à ladite première desdites saisies de navigation.

5. Procédé selon la revendication 4, comprenant en outre l'étape consistant à stocker dans ledit dispositif électronique portatif une valeur qui correspond à ladite fonction qui correspond à ladite première desdites saisies de navigation.

6. Procédé selon la revendication 5, comprenant en outre les étapes consistant à détecter une deuxième de ladite au moins une saisie de sélection, ladite deuxième de ladite au moins une saisie de sélection étant une saisie d'entrée, et traiter une fonction qui comprend l'exécution d'une opération d'entrée.

7. Procédé selon la revendication 6, comprenant en outre l'étape consistant à utiliser comme ladite exécution d'une opération d'entrée la composition d'un numéro de téléphone qui correspond à ladite valeur.

8. Procédé selon la revendication 1, comprenant en outre les étapes consistant à utiliser une molette (32) avec ledit appareil de saisie et à détecter une rotation de ladite molette.

9. Procédé selon la revendication 1, comprenant en outre l'étape consistant à produire une nouvelle fois le premier marqueur sonore audible après l'expiration d'une période de temps prédéterminée pendant laquelle il n'a été détecté ni une deuxième desdites saisies de navigation, ni une saisie de sélection.

10. Procédé selon la revendication 1, comprenant en outre les étapes consistant à incrémenter un compteur (22) lorsque ladite première desdites saisies de navigation résulte du mouvement dudit au moins un élément de saisie dans ladite première direction et à décrémenter ledit compteur lorsque ladite première desdites saisies de navigation résulte du mouvement dudit au moins un élément de saisie dans ladite seconde direction.

11. Dispositif électronique portatif (4) comprenant :
un appareil de traitement (20) ;
un appareil de saisie (16), qui coopère avec ledit appareil de traitement, ledit appareil de saisie comprenant au moins un élément de saisie (32) qui peut se déplacer dans une première direction (34) et dans une seconde direction (38), afin de produire une pluralité de saisies de navigation, l'appareil de saisie étant conçu pour produire au moins une saisie de sélection pour ledit appareil de traitement ;
une mémoire (48) qui coopère avec ledit appareil de traitement ; et
un transducteur de sortie audible (60) qui coopère avec ledit appareil de traitement,
dans lequel ledit appareil de traitement est conçu pour produire un marqueur sonore audible initial représentant un mot prononcé initial qui correspond à une position initiale de navigation, détecter une desdites saisies de navigation en provenance dudit au moins un élément de saisie, détecter quel est, entre le mouvement dudit au moins un élément de saisie dans ladite première direction et le mouvement dudit au moins un élément de saisie dans ladite seconde direction, celui qui a produit ladite une desdites saisies de navigation ; et
dans lequel ledit transducteur de sortie audible, en réponse audit premier signal, est conçu pour produire un son correspondant à un mot prononcé.

12. Dispositif électronique portatif selon la revendication 11, dans lequel ledit appareil de traitement comprend un processeur (44) et un convertisseur numérique-analogique (52) qui coopère avec ledit processeur, ledit transducteur de sortie audible coopérant avec ledit convertisseur numérique-analogique, dans lequel ledit premier signal est un premier signal numérique et dans lequel ledit convertisseur numérique-analogique, en réponse audit premier signal numérique, est conçu pour fournir en sortie audit transducteur de sortie audible un premier signal analogique représentant ledit mot prononcé.

13. Dispositif électronique portatif selon la revendication 11, dans lequel ledit appareil de traitement comprend un compteur (22), dans lequel ledit appareil de traitement est conçu pour incrémenter ledit compteur lorsque ladite première desdites saisies de navigation résulte du mouvement dudit au moins un élément de saisie dans ladite première direction et dans lequel ledit appareil de traitement est conçu pour décrémenter ledit compteur lorsque ladite première desdites saisies de navigation résulte du mouvement dudit au moins un élément de saisie dans ladite seconde direction.

14. Dispositif électronique portatif selon la revendication 11, dans lequel ledit appareil de saisie comprend une molette rotative (32).

15. Dispositif électronique portatif selon la revendication 14, dans lequel la rotation de ladite molette rotative produit lesdites saisies de navigation pour ledit appareil de traitement.

16. Dispositif électronique portatif selon la revendication 15, dans lequel ladite molette rotative peut être translatée, la translation de ladite molette rotative produisant ladite au moins une saisie de sélection.

17. Dispositif électronique portatif selon la revendication 11, dans lequel, en réponse à une première de ladite au moins une saisie de sélection, ledit appareil de traitement est conçu pour traiter une fonction qui correspond à ladite première desdites saisies de navigation et pour stocker dans ladite mémoire une valeur qui correspond à ladite première desdites saisies de navigation.

18. Dispositif électronique portatif selon la revendication 17, dans lequel, en réponse à une deuxième de ladite au moins une entrée de sélection, ledit appareil de traitement est conçu pour exécuter une opération d'entrée.

19. Dispositif électronique portatif selon la revendication 18, dans lequel ladite opération d'entrée comprend la composition d'un numéro de téléphone qui correspond à la valeur de ladite mémoire.
